Europäisches Patentamt

(19) European Patent Office

Office européen des brevets

(11) Publication number: **0 295 735**
**B1**

# (12) EUROPEAN PATENT SPECIFICATION

(45) Date of publication of the patent specification:
**07.11.90**

(21) Application number: **88201103.4**

(22) Date of filing: **02.06.88**

(51) Int. Cl.⁵: **B60Q 1/44**

(54) An electronic safety accessory for cars that will selective control extra brakelights.

(30) Priority: **02.06.87 NL 8701289**

(43) Date of publication of application:
**21.12.88 Bulletin 88/51**

(45) Publication of the grant of the patent:
**07.11.90 Bulletin 90/45**

(84) Designated Contracting States:
**BE DE NL**

(56) References cited:
**DE-A- 3 100 333**
**DE-A- 3 103 049**
**DE-A- 3 104 479**
**DE-A- 3 119 386**
**DE-A- 3 317 896**
**DE-A- 3 322 795**
**DE-A- 3 519 828**

(73) Proprietor: **Beenen, Nico, Daniel Stalpaertstraat 59,**
**NL-1333 NB Almere(NL)**

(72) Inventor: **Beenen, Nico, Daniel Stalpaertstraat 59,**
**NL-1333 NB Almere(NL)**

ACTORUM AG

## Description

An electronic unit for cars, in which the input is connected to the conventional brake lights and the output to two additional brake lights such as defined in the preamble of claim 1 is already known from DE-A 3 104 479. The disadvanage of such a system is, however, that the additional brake lights are switched on for the duration of a braking and this might distract the driver of a following vehicle. Thus, a principal object of the invention is to provide an electronic unit which switches on the extra brake lights only in critical situations. This is achieved with an electronic unit according to claim 1.

The most important reason for fitting additional high-mounted brake lights to passenger vehicles is the fact that these lights can be seen more easily in the stream of traffic. Between 1981 and 1984 research was undertaken, mainly in Germany and the United States, to see if the use of one or two additional brake lights had a positive effect on road safety. In 1983 5% of passenger cars in Germany were fitted with two additional high-mounted brake lights. An investigation showed that the continual use of four brake lights was considered to be a nuisance by 36% of road users. In 1983 in the United States researchers came to the conclusion that the fitting of one additional high-mounted brake light had a positive effect on road safety. The fitting of an extra brake light has become compulsory in the United States since the beginning of 1986. In contrast to this there are only a few cars fitted with extra brake lights in Germany, and in many countries in Europe it is illegal to use extra brake lights.

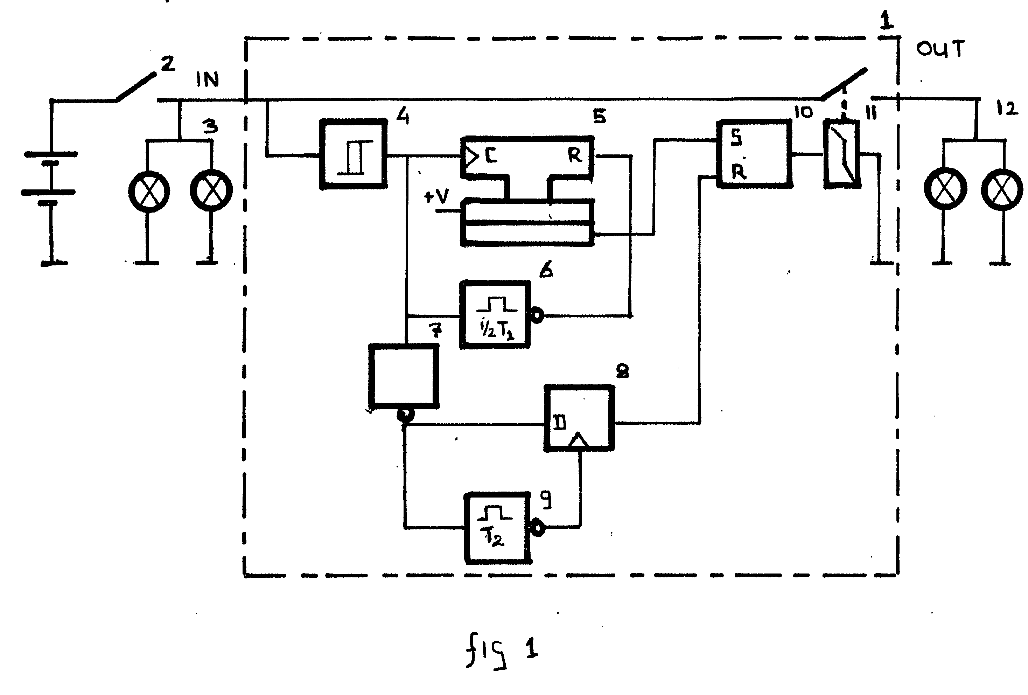

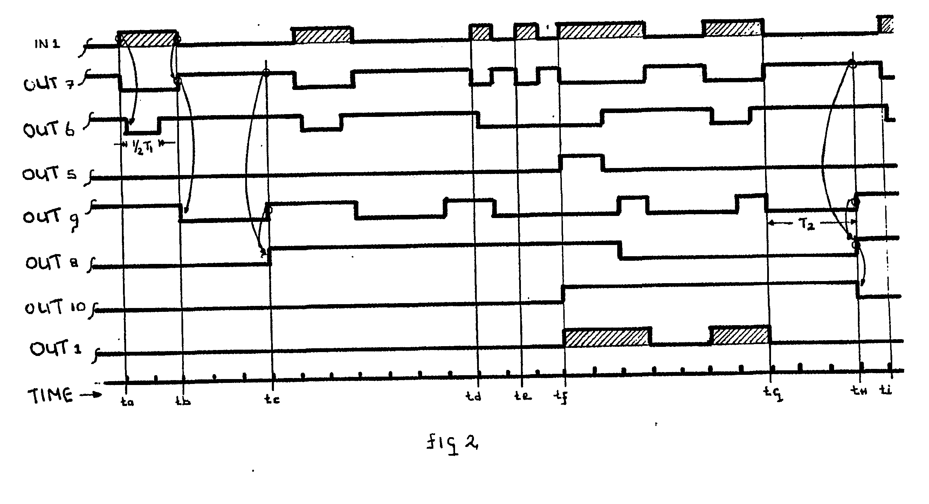

The invention concerns an electronic unit which connects additional high-mounted brake lights in parallel with the normal brake light circuit at the command of the driver. The driver will use the extra brake lights in traffic situations where his slow moving or stationary verhicle is a potential danger for following vehicles. The use of four brake lights gives a better indication of danger than the usual two brake lights. The unique operation which the driver has to carry out in order to switch in the extra brake lights is based on the fact that drivers often use "cadence" braking in critical situations. This action, the rapid application and release of the brakes a number of times, rarely occurs in normal traffic situations. The electronic unit, which is the subject of this invention, switches on the extra brake lights when the driver presses on the brake pedal three times within the set time of three seconds. When switched on the extra brake lights operate with the normal brake lights. The invention also provides the option to disconnect the extra brake lights again automatically. This occurs when the driver, after releasing the brake pedal, does not use the brakes again for a period longer then 3 seconds. The circuit diagram of the electronic unit is shown in Figure 1, and the time diagram is shown in Figure 2.

The electronic circuit (1) samples the brake on (ta) and offsets (tb) caused by the depression and release of the brakepedal (2). It activates a relay (11) after detection of three following brake-onsets (td), (te), (tf). These three brake onsets must happen within a timewindow of T1 sec. Only under this condition the relay switches two additional brake lights (12) in parallel with the conventional brake lights (3) and this situation will remain till the moment (th) that the time between the detection of a brake puls trailing edge (tg) and the next brake puls leading edge (ti) exceeds a time limit of T2 seconds. The electronic circuit will deactivate the relay and the additional brake lights will not be operated when the brake is next applied. A more detailed description follows with T1 and T2 equal to 3 seconds. Brake pulses are filtered (4) and every leading edge (ta), (td) of each brake puls triggers timer (6) and this one will generate a 1.5 second window. If another brake puls is detected (te) within this interval it stretches the window with 1.5 second and "1" will shift into first stage of register (5). If another brake puls is detected (tg) within this extended time interval "1" will shift into the second stage of register (5) and immidiate flipflop (10) will be set and relay (11) will activate. Every trailing edge of a brake puls (tb), (tg) triggers timer (9) that will generate a 3 second window with a possible extention. At the end of this window (tc), (th) a sample of the incoming brake signal is clocked into register (8). When no brake signal is present at that time register (10) will be reset and relay (11) will deactivate.

## Claim

An electronic unit (1) for cars, in which the input is connected to the conventional brake lights (3) and the output to two additional brake lights (12) which are switched in parallel with the conventional brake lights, characterized in that the leading and trailing edges of the brake pulses, caused by the operation of the brake pedal (2), are detected and the additional brake lights are switched on when three brake onsets have been detected within a time limit of Ti seconds and they will be disconnected again as soon as the time between the detection of a brake pulse trailing edge and the next brake pulse leading edge exceeds a time limit of T2 seconds.

## Patentanspruch

Eine electronische Schaltung (1), deren Eintritt mit den Standardbremslichtern des Wagens (3) angeslossen ist und deren Ausgang an zwei Zusatzbremslichter (12) verbunden ist, die parallel mit den Standardbremslichtern geschaltet werden, dadurch gekennzeichnet, dass die durch Drücken und Lösen des Bremspedals (2) erzeugte Impulsstufen nachgewiesen werden und die Zündung der Zusatzbremslichter ausgelöst wird, nachdem drei aufsteigende, durch die Pedalbewegung innerhalb von einer T1 Secunden-Zeitdauer erzeugte Stufen nachgewiesen werden, und der Kontakt wird unterbrochen, wenn die Zeitdauer zwischen eine absteigende Stufe und die folgende aufsteigende Stufe mehr als T2 Secunden beträgt.

## Revendication

Un montage électronique (1) dont l'entrée est branchée aux feux de frein standards de la voiture (3) et dont la sortie est branchée à deux feux de frein supplémentaires (12) montés en parallèle avec les feux standards et ils auront la caractéristique suivante, à savoir que les paliers d'impulsion du frein produits par l'utilisation de la pédale de frein (2), sont détectés et déclenchent l'allumage des feux de frein supplémentaires dès que trois paliers ascendants dans un laps de temps T1 secondes sont détectés et le contact sera interrompu si le laps de temps entre un palier descendant d'une impulsion de frein et le palier ascendant suivant est supérieur à T2 seconds.

fig 2

EP 0 295 735 B1